(19) **Europäisches Patentamt / European Patent Office / Office européen des brevets**

(11) **EP 2 982 743 B1**

(12) **EUROPEAN PATENT SPECIFICATION**

(45) Date of publication and mention
of the grant of the patent:
**17.07.2019 Bulletin 2019/29**

(21) Application number: **14778952.3**

(22) Date of filing: **04.03.2014**

(51) Int Cl.:
**C12M 1/26** (2006.01)      **B01D 39/10** (2006.01)

(86) International application number:
**PCT/JP2014/055439**

(87) International publication number:
**WO 2014/162810 (09.10.2014 Gazette 2014/41)**

(54) **FILTER FOR CAPTURING BIOLOGICAL SUBSTANCE**

**FILTER ZUR ERFASSUNG EINER BIOLOGISCHEN SUBSTANZ**

**FILTRE POUR CAPTURER UNE SUBSTANCE BIOLOGIQUE**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.04.2013 US 201361808244 P**

(43) Date of publication of application:
**10.02.2016 Bulletin 2016/06**

(73) Proprietor: **Hitachi Chemical Company, Ltd.**
**Chiyoda-ku**
**Tokyo 100-6606 (JP)**

(72) Inventors:
  • **TAKAI, Kenji**
    **Chikusei-shi**
    **Ibaraki 308-0861 (JP)**
  • **YAGI, Satomi**
    **Chikusei-shi**
    **Ibaraki 308-0861 (JP)**
  • **SUZUKI, Takahiro**
    **Chikusei-shi**
    **Ibaraki 308-0861 (JP)**
  • **EJIRI, Yoshinori**
    **Chikusei-shi**
    **Ibaraki 308-0861 (JP)**
  • **YAMAMOTO, Hiroshi**
    **Chikusei-shi**
    **Ibaraki 308-8521 (JP)**
  • **TAKAHASHI, Akio**
    **Chikusei-shi**
    **Ibaraki 308-8521 (JP)**

(74) Representative: **Hoffmann Eitle**
**Patent- und Rechtsanwälte PartmbB**
**Arabellastraße 30**
**81925 München (DE)**

(56) References cited:
  EP-A1- 2 851 418        WO-A1-2012/173097
  WO-A1-2012/173097       WO-A2-2008/130445
  JP-A- 2006 249 485      JP-A- 2006 249 485
  JP-A- 2008 240 083      JP-A- 2009 179 845
  US-A1- 2002 119 579     US-A1- 2008 038 567
  US-B1- 6 277 489

## Description

### Technical Field

The present invention relates to a filter that can efficiently capture Circulating Tumor Cells (hereunder, CTCs).

### Background Art

Enrichment of cancer cells for research and clinical purposes is a very important process, as obtaining enriched cancer cell samples from blood has potential application for cancer diagnosis. The most prominent factor for prognosis and treatment of cancer, for example, is the presence or absence of cancer cell metastasis at first examination and during treatment. Detection of CTCs, when initial diffusion of cancer cells has reached the peripheral blood, is a useful means of determining progression of cancer pathology. However, because blood components such as erythrocytes and leukocytes are overwhelmingly abundant in blood, detection of very small levels of CTCs is difficult.

In recent years, the use of parylene-employing resin filters has been proposed as a method of achieving efficient detection of small amounts of CTCs (Patent Literature 1).

As an alternative there has been proposed the use of filters employing metals instead of resins, as a method of improving filter strength and accomplishing separation based on differences between leukocyte and cancer cell deformability (Patent Literature 2).

Patent Literature 3, which constitutes prior art under Article 54(3) EPC, relates to a cancer cell-trapping metal filter having through-holes with a wave-shaped opening.

Patent Literature 4: discloses a cancer cell enrichment filter comprising a metal substrate having a gold plated surface.

### Citation List

### Patent Literature

Patent Literature 1: WO2010/135603
Patent Literature 2: JP2013/42689
Patent Literature 3: WO 2013/172265 A1 (patent family member: EP 2 851 418 A1)
Patent literature 4: WO2012/173097 A1

### Non Patent Literature

Non Patent Literature 1: Kagaku Binran, Standard Edition, The Chemical Society of Japan, Maruzen, 4th Revision, 1993
Non Patent Literature 2: A. Yamamoto et al., J. Biomed. Mater. Res., 39, 331(1998)

### Summary of Invention

### Technical Problem

During the course of conducting research on metal-employing filters, the present inventors discovered the following.

Namely, metals with a higher ionization tendency than hydrogen, such as Mg, Al, Ti, Cr, Fe, Ni and Sn, dissolve in the presence of powerful chelating agents such as disodium ethylenediaminetetraacetate (EDTA) citric acid and sodium fluoride, and the like. EDTA, citric acid and sodium fluoride are used as *in vitro* blood coagulants. In Patent Literature 2, EDTA is used as a blood coagulant.

The ionization tendency is represented in order of the standard oxidation-reduction potential between aquo-ions and simple metals in aqueous solution. Assuming hydrated metal ions to be in a theoretical ideal solution state of 1 mol/kg, which is a state of infinite dilution, the standard oxidation reduction potential and the change in the standard Gibbs free energy of formation of the hydrated metal ion are in the relationship represented by the following formula (1). Here, F represents Faraday's constant and z represents the ion electrical charge.

$$\Delta_f G^0 = zFE^0 : \text{Formula (1)}$$

The following are the typical standard oxidation reduction potentials cited in Non Patent Literature 1.

Base metals

$Mg^{2+}(aq) + 2e^- \leftrightarrow Mg(s)$      $E^0 = -2.356$ V
$Al^{3+}(aq) + 3e^- \leftrightarrow Al(s)$      $E^0 = -1.676$ V
$Ti^{4+}(aq) + 4e^- \leftrightarrow Ti(s)$      $E^0 = -1.63$ V
$Cr^{3+}(aq) + 3 e^- \leftrightarrow Cr(s)$      $E^0 = -0.74$ V
$Fe2^+(aq) + 2e^- \leftrightarrow Fe(s)$      $E^0 = -0.44$ V
$Ni^{2+}(aq) + 2e^- \leftrightarrow Ni(s)$      $E^0 = -0.257$ V
$Sn^{2+}(aq) + 2e^- \leftrightarrow Sn(s)$      $E^0 = -0.1375$ V

Hydrogen

$2H^+(aq) + 2e^- \leftrightarrow H_2(g)$      $E^0 = 0$ V

Precious metals

$Cu^{2+}(aq) + 2e^- \leftrightarrow Cu(s)$      $E^0 = 0.340$ V
$Ag^+(aq) + e^- \leftrightarrow Cu(s)$      $E^0 = 0.7991$ V
$Pd^{2+}(aq) + 2e^- \leftrightarrow Pd(s)$      $E^0 = 0.915$ V
$Ir3^+(aq) + 3e^- \leftrightarrow Ir(s)$      $E^0 = 1.156$ V
$Pt^{2+}(aq) + 2e^- \leftrightarrow Pt(s)$      $E^0 = 1.188$ V
$Au^{3+}(aq) + 3e^- \leftrightarrow Au(s)$      $E^0 = 1.52$ V

Of these, base metals with lower standard oxidation reduction potential than hydrogen are oxidized by the $H^+$ ions in water. This tendency is particularly notable in acidic solutions with high $H^+$ concentration. When a substance with high chelating ability such as EDTA is present, the base metal dissolves and discoloration takes place.

Stainless steel (for example, nickel/chromium/iron alloy) is a type of metal that has been considered in order to deal with this issue, but a method for formation of stainless steel by electroplating has not been established.

This suggests the use of precious metals, and precious metals that are capable of electroplating are Au, Ag, Ir, Pd, Pt, Cu and the like. Of these, Ir, Pt and Au have high standard oxidation reduction potentials but only dissolve in certain liquids (aqua regalis and the like) that include powerful oxidizing agents and chelating agents. Au, which has the highest oxidation-reduction potential among the above, is the most resistant to dissolution, while Pt which has the second highest oxidation-reduction potential, is the next most resistant to dissolution.

Furthermore, the metals other than Au are known to have cytotoxicity. Non Patent Literature 2, for example, is an article listing metals in terms of their cytotoxicity. According to Non Patent Literature 2, the toxicities of metal ions are as follows. Precious metals such as Ag and Ir also have high cytotoxicity.

Strong toxicity $Cd^{2+} > In^{3+} > V^{3+} > Be^{2+} > Sb^{3+} > Ag^+ > Hg^{2+} > Cr^{6+} > Co^{2+} > Bi3^+ > Ir^{4+} > Cr^{3+} > Hg^+ > Cu^{2+} > Rh^{3+} > Tl^{3+} > Sn^{2+} > Ga^{3+} > Pb^{2+} > Cu^+ > Mn^{2+} > Tl^+ > Ni^{2+} > Zn^{2+} > Y^{3+} > W^{6+} > Fe^{3+} > Pd^{2+} > Fe^{2+} > Ti^{4+} > Hf^{4+} > Ru^{3+} > Sr^{2+} > Sn^{4+} > Ba^{2+} > Cs^+ > Nb^{5+} > Ta^{5+} > Zr^{4+} > Al^{3+} > Mo^{5+} > Rb^+ > Li^+$ Weak toxicity

For these reasons, the production of Au filter is a potentially promising solution. However, the high cost of Au constitutes a major barrier to this strategy.

In addition, because metals have poor affinity with blood components, when biocompatible substances are treated on metal surfaces, the metals that form oxide films do not have a stable surface condition, and therefore they do not easily adsorb biocompatible substances.

The present invention provides an improvement over conventional CTC capturing filters, and its object is to maintain the pressure resistance of conventional metal filters while imparting rust resistance, lowering cytotoxicity and increasing biocompatibility.

**Solution to Problem**

The present inventors has found that a biomolecule capturing filter, an electroless gold plating on a surface of a biomolecule capturing filter made of a metal other than gold can solve the above problem through diligent studies.

Specifically, the present invention provides a biomolecule capturing filter, comprising a gold plating on the surface of a biomolecule capturing filter made of a metal other than gold, the gold plating being electroless gold plating, wherein the thickness of the gold plating is from 0.1 $\mu$m to 3 $\mu$m.

The electroless gold plating may contain no cyanogen.

The biomolecule capturing filter may be composed mainly of nickel, silver, palladium or copper and may be composed mainly of an alloy containing nickel, silver, palladium or copper.

The electroless gold plating may be a combination of displacement gold plating, and reductive gold plating on the displacement gold plating.

The displacement gold plating may be non-cyanogen-based plating containing gold sulfite.

The gold plating thickness may be between 0.05 $\mu$m and 1 $\mu$m, inclusive.

The biomolecule may be a cell and may be a cancer cell.

A surface treatment with an organic material may be performed on the gold plating. The organic material may form a coordination bond with gold on the gold plating. The organic material may be a compound having at least one functional group selected from the group consisting of a mercapto group, a sulfide group and a disulfide group. A biocompatible polymer may be chemically adsorbed on the organic material.

Opening shapes of through-holes of the biomolecule capturing filter may include at least one shape selected from the group consisting of circular, elliptical, rounded rectangular, rectangular and square. Opening shapes of through-holes of the biomolecule capturing filter may include at least one shape selected from the group consisting of rectangular and rounded rectangular and short side lengths may be between 5 $\mu$m and 15 $\mu$m, inclusive.

**Brief Description of Drawings**

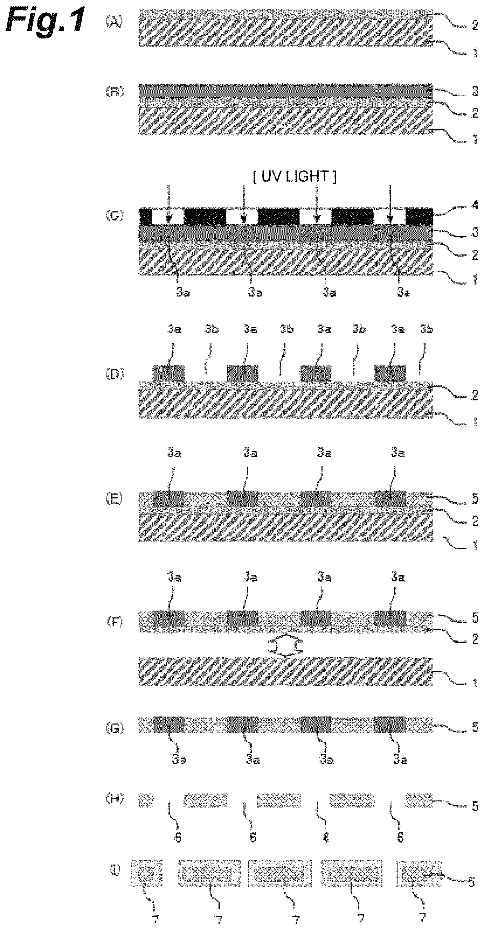

Fig. 1 is a simplified cross-sectional view showing a method for producing a metal thin-film filter using a substrate comprising a peelable copper foil on Metal Clad Laminate (MCL) or a Ni foil on MCL when copper plating is to be performed. In the illustrated steps, (A) shows peelable copper foil (Ni foil in the case of copper plating)-attached MCL, used as the substrate, (B) shows a photoresist laminate on the substrate, (C) shows photoresist exposure with a photomask, (D) shows developing removal of the unexposed sections of the photoresist, (E) shows electroforming plating onto sections not covered with the photoresist, (F) shows release of the peelable copper foil with an electroforming plating layer from the MCL, (G) shows self-supporting film formation by removal of the peelable copper foil by chemical dissolution with a chemical solution, and (H) shows removal of the photoresist remaining in the self-supporting film to form through-holes. Also, (I) shows a step of electroless gold plating.

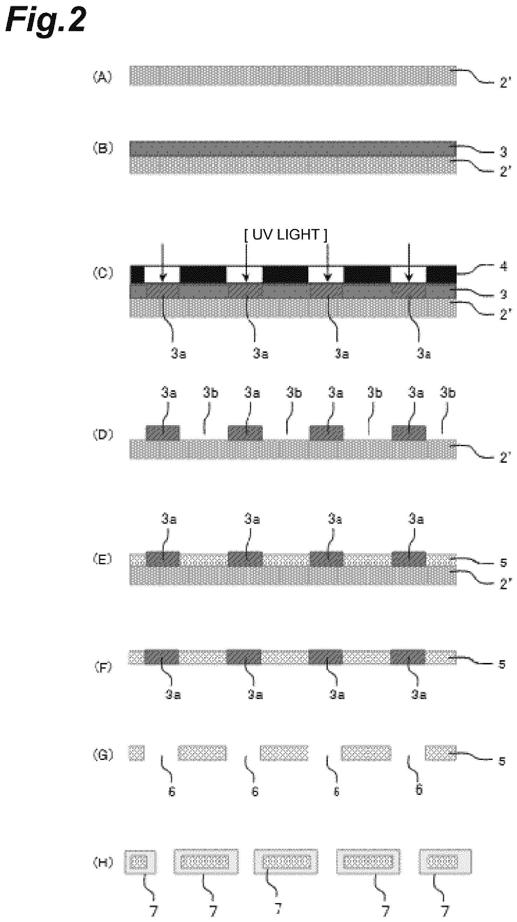

Fig. 2 is a simplified cross-sectional view showing a method for producing a metal thin-film filter using a copper sheet (or a Ni sheet when copper plating is to be performed). In the illustrated steps, (A) shows a copper sheet used as the substrate, (B) shows a photoresist laminate on the copper sheet, (C) shows photoresist exposure with a photomask, (D) shows developing removal of the unexposed sections of the photoresist, (E) shows electroforming plating onto sections not covered with the photoresist, (F) shows self-supporting film formation by removal of the copper sheet by chemical etching, (G) shows removal of the photoresist remaining in the self-supporting film to form through-holes, and (H) shows electroless gold plating.

**Description of Embodiments**

The present invention will now be explained in detail with reference to Fig. 1. An example of a method of producing a filter, and the filter itself, will now be explained.

First, a peelable copper foil (or Ni foil in the case of copper plating)-attached resin layer is prepared. Next, a photoresist is prepared on the substrate. The thickness of the photoresist is preferably 1.0 to 2.0 times the thickness of the conductor. A small thickness will render the subsequent resist release more difficult, while a large thickness will render circuit formation more difficult. Specifically, the thickness is preferably 15 to 50 $\mu$m. The photomask is then laid over it and photoresist exposure is performed. Next, the unexposed sections of the photoresist are removed by development with an alkali solution or the like. The sections not covered with the photoresist are then plated by pattern electroplating. The plated sections serve as the filter material. A negative-type photosensitive resin composition is preferred for the photosensitive resin composition as the photoresist. The negative-type photosensitive resin composition preferably includes at least a binder resin, an unsaturated bond-containing photopolymerizable compound and a photopolymerization initiator.

The filter material is a metal. The main component of the metal is preferably nickel, silver, palladium or copper or an alloy thereof, and such metals can be electroplated.

Electrolytic nickel plating may be a Watt bath with nickel sulfate, nickel chloride or boric acid as the main component), a sulfamic acid bath with nickel sulfamate or boric acid as the main component) or a strike bath (with nickel chloride or hydrochloric acid as the main component).

Electrolytic silver plating may be in a bath composed mainly of silver potassium cyanide or potassium tartrate.

Electrolysis palladium plating may be in a bath comprising a water-soluble palladium salt or a naphthalenesulfonic acid compound.

Electrolytic copper plating may be in a bath composed mainly of copper sulfate and sulfuric acid and chloride ion.

Electrolytic plating can be accomplished using such a plating bath. The current density during electrolytic plating may be in the range of 0.3 to $4A/dm^2$, and more preferably in the range of 0.5 to $3A/dm^2$. A current density of no greater than $4A/dm^2$ will minimize surface roughness, while a current density of at least $0.3A/dm^2$ will allow adequate growth of the metal crystal grains and increase the barrier layer effect, so that a satisfactory effect will be obtained for this embodiment.

The resist locations during plating serve as the through-hole locations. The opening shapes of the through-holes may be circular, elliptical, square, rectangular, rounded rectangular, polygonal, or the like. From the viewpoint of allowing efficient capturing of the target components, it is preferably circular, rectangular or rounded rectangular. Rounded rectangular shapes are most preferred from the viewpoint of preventing blocking of the filter.

The pore sizes are set according to the size of the component that is to be captured. Throughout the present specification, the pore sizes for opening shapes other than circular, such as elliptical, rectangular or polygonal, are the maximum diameters of spheres that can pass through the through-holes. When the opening shapes are rectangular, the pore sizes of the through-holes will be the lengths of the short sides of the rectangles, and when the opening shapes are polygonal they will be the diameters of inscribed circles of the polygons. When the opening shapes are rectangular or rounded rectangular, gaps will be present in the long side directions of the opening shapes in the openings even when the component to be captured has been captured in the through-holes. Since liquid can pass through these gaps, it is possible to prevent blocking of the filter. The short side length of the metal filter is preferably 5 to 15 $\mu$m and more preferably 7 to 9 $\mu$m.

The mean open area ratio of the through-holes of the metal filter is preferably 5% to 50%, more preferably 10% to 40% and most preferably 10% to 30%. Here, the "open area ratio" refers to the percentage of area occupied by the through-holes with respect to the total area of the filter. The mean open area ratio is preferably larger from the viewpoint of preventing blocking, but if it exceeds 50% the filter strength may be reduced and processing may be hampered. Also, if it is lower than 5%, blocking will tend to occur and the concentrating performance of the filter may be reduced.

The thickness of the metal filter is preferably 3 to 50 $\mu$m, more preferably 5 to 40 $\mu$m and most preferably 5 to 30 $\mu$m. If the filter thickness is less than 3 $\mu$m the filter strength may be reduced and manageability may be compromised. If it exceeds 50 $\mu$m, on the other hand, productivity will be impaired due to a longer machining time, disadvantages may be introduced in terms of cost as a result of excessive material consumption, and micromachining itself may become more difficult.

After circuit formation, the resin layer is released and the copper foil is etched to complete the metal filter (Fig. 1(H) and Fig. 2(G)).

The resist remaining on the filter is then removed with a strong alkali. The strong alkali is preferably a 0.1 to 10 wt% NaOH or KOH aqueous solution. Monoethanolamine (1-20 vol%) may also be added to accelerate the release. When release is difficult, the resist may be removed with a solution containing an alkali added to sodium permanganate, potassium permanganate or the like (0.1 to 10 wt% NaOH or KOH).

The resist-removed filter may be subjected to gold plating. Gold has the highest oxidation-reduction potential among all of the aforementioned metals and is considered to have no cytotoxicity. It also undergoes virtually no discoloration with prolonged storage.

When electrolytic gold plating is carried out, thickness variation is considerable and precision of the filter pore size tends to become more significant, and therefore electrolytic gold plating is not desirable. Thus electroless gold plating is carried out.

Electroless gold plating also exhibits an effect by displacement plating, but the effect is greater by a combination of displacement plating and reduction plating.

The metal filter before electroless gold plating may have an oxidized surface. The oxide film is removed in this case, but cleaning may also be carried out with an aqueous solution containing a compound that forms a complex with metal ions.

Specifically, it may be an aqueous solution containing a cyanogen, EDTA or a citric acid compound.

Citric acid compounds are most suitable for pretreatment of gold plating. Specifically, there may be used an anhydride of citric acid, a hydrate of citric acid, a salt of citric acid or a citric acid salt hydrate, and more specifically citric anhydride, citric acid monohydrate, sodium citrate, potassium citrate or the like. The concentration is preferably 0.01 to 3 mol/L, more preferably 0.03 to 2 mol/L and most preferably in the range of 0.05 to 1 mol/L. At 0.01 mol/L or greater, adhesiveness between the electroless gold plating layer and the metal filter will be increased.

A concentration exceeding 3 mol/L does not increase the effect and is not preferred in economical terms.

Dipping in a solution containing citric acid may be carried out at 70°C to 95°C for 1 to 20 minutes.

A solution containing citric acid may further contain an added reducing agent present in the plating solution in a range that produces the effect of the invention, or a buffering agent such as a pH regulator, but such reducing agents and pH regulators are preferably present only in small amounts, with an aqueous solution consisting of citric acid alone being most preferred. The pH of the citric acid-containing solution is preferably 5 to 10 and more preferably 6 to 9.

The pH regulator is not particularly restricted so long as it is an acid or alkali, acids including hydrochloric acid, sulfuric acid and nitric acid, and alkalis including hydroxide solutions of alkali metals or alkaline earth metals, such as sodium hydroxide or potassium hydroxide, and sodium carbonate. As mentioned above, these may be used in amounts in ranges that do not inhibit the effect of the citric acid. If nitric acid is added to the citric acid-containing solution at a high concentration of 100 ml/L, the effect of improving adhesion will be reduced as compared to treatment with a solution containing citric acid alone.

There are no particular restrictions on the reducing agent so long as it has reducing power, and there may be mentioned hypophosphorous acid, formaldehyde, dimethylamineborane, sodium borohydride and the like.

Displacement gold plating is subsequently performed. Displacement gold plating may be carried out using a cyanogen bath or non-cyanogen bath, but a non-cyanogen bath is preferred in consideration of environmental load and cytotoxicity of the residue. Examples of gold salts in a non-cyanogen bath include auric chloride, auric sulfite, auric thiosulfate and auric thiomalate. A gold salt may be used alone, or two or more may be used in combination.

Because a cyanogen-based bath has too powerful a dissolving effect on metals, for some metals the dissolution causes generation of pinholes. When pretreatment is to be thoroughly carried out as described above, it is preferred to use a non-cyanogen-based plating bath.

Gold sulfite is especially preferred as the gold source. Gold sulfites include sodium gold sulfite, potassium gold sulfite and ammonium gold sulfite.

The gold concentration is preferably in the range of 0.1 g/L to 5 g/L. Gold will not easily precipitate at less than 0.1 g/L, while the solution will tend to dissolve more easily at greater than 5 g/L.

An ammonium salt or ethylenediaminetetraacetic acid salt may be included in the displacement gold plating bath as a chelating agent for gold. Ammonium salts include ammonium chloride and ammonium sulfate, and ethylenediaminetetraacetic acid salts include ethylenediaminetetraacetic acid, sodium ethylenediaminetetraacetate, potassium ethylenediaminetetraacetate and ammonium ethylenediaminetetraacetate. The ammonium salt concentration is preferably in the range of $7 \times 10^{-3}$ mol/L to 0.4 mol/L, because if the ammonium salt concentration is outside of this range the solution will tend to be unstable. Also, the ethylenediaminetetraacetic acid salt concentration is preferably in the range of $2 \times 10^{-3}$ mol/L to 0.2 mol/L, because if the ethylenediaminetetraacetic acid salt concentration is outside of this range the solution will tend be unstable.

A sulfurous acid salt may be also present at 0.1 g/L to 50 g/L to maintain stability of the solution. Sulfurous acid salts include sodium sulfite, potassium sulfite and ammonium sulfite.

When the pH is to be lowered, it is preferred to use hydrochloric acid or sulfuric acid as the pH regulator. When the pH is to be raised, it is preferred to use sodium hydroxide, potassium hydroxide or ammonia water. The pH may be adjusted to a value of between 6 and 7. A pH outside of this range will adversely affect the solution stability and the outer appearance of the plating.

A liquid temperature of between 30°C and 80°C is preferred for displacement plating, as a temperature outside of this range will adversely affect the solution stability and the outer appearance of the plating.

Displacement plating is accomplished as described above, but it is difficult to achieve complete metal coverage by displacement plating. Reductive gold plating with a reducing agent is carried out next. The thickness of the displacement plating is preferably in the range of 0.02 to 0.1 μm.

The gold salt for reductive gold plating is preferably a gold sulfite salt or thiosulfuric acid salt, with a gold content preferably in the range of 1 to 10 g/L. A gold content of less than 1 g/L will reduce the gold deposition reaction, while a gold content of greater than 10 g/L will lower the plating solution stability while also increasing the gold consumption due to loss of the plating solution, and is therefore undesirable. The content is more preferably 2 to 5 g/L.

The reducing agent may be hypophosphorous acid, formaldehyde, dimethylamineborane, sodium borohydride or the like, but phenyl compound-based reducing agents are more preferred. Examples include phenol, o-cresol, p-cresol, o-ethylphenol, p-ethylphenol, t-butylphenol, o-aminophenol, p-aminophenol, hydroquinone, catechol, pyrogallol,

6

methylhydroquinone, aniline, o-phenylenediamine, p-phenylenediamine, o-toluidine, o-ethylaniline and p-ethylaniline, any one or two or more of which may be used.

The reducing agent content is preferably 0.5 to 50 g/L. If the reducing agent content is less than 0.5 g/L it will tend to be difficult to obtain a practical deposition rate, and if it exceeds 50 g/L the plating solution stability will tend to be reduced. The reducing agent content is more preferably 2 to 10 g/L and most preferably 2 to 5 g/L.

The electroless gold plating solution may also contain a heavy metal salt. From the viewpoint of accelerating the deposition rate, the heavy metal salt is preferably at least one selected from the group consisting of thallium salts, lead salts, arsenic salts, antimony salts, tellurium salts and bismuth salts.

Thallium salts include inorganic compound salts such as thallium sulfate salts, thallium chloride salts, thallium oxide salts and thallium nitrate salts, and organic complexes such as dithallium malonate salts, lead salts include inorganic compound salts such as lead sulfate salt and lead nitrate salt, and organic acetic acid salts such as acetic acid salts.

Arsenic salts include inorganic compound salts and organic complex salts such as arsenous acid salts, arsenic acid salts and arsenic trioxide, and antimony salts include organic complex salts such as antimonyl tartrate, and inorganic compound salts such as antimony chloride salt, antimony oxysulfate salt and antimony trioxide.

Tellurium salts include inorganic compound salts and organic complex salts such as tellurous acid salts and telluric acid salts, and bismuth salts include inorganic compound salts such as bismuth(III) sulfate, bismuth(III) chloride and bismuth(III) nitrate, and organic complex salts such as bismuth(III) oxalate.

The aforementioned heavy metal salts may be used alone or in combinations of more than one, the total amount added being preferably 1 to 100 ppm and more preferably 1 to 10 ppm based on the total volume of the plating solution. At less than 1 ppm the effect of increasing the deposition rate may not be sufficient, and at greater than 100 ppm the plating solution stability may be impaired.

The electroless gold plating solution may also contain a sulfur-based compound. By further including a sulfur compound in an electroless gold plating solution containing a phenyl compound-based reducing agent and a heavy metal salt, it is possible to obtain a sufficient deposition rate even with a low liquid temperature of about 60°C to 80°C, while the coating film appearance is also satisfactory and the plating solution stability is particularly excellent.

Sulfur-based compounds include sulfide salts, thiocyanic acid salts, thiourea compounds, mercaptane compounds, sulfide compounds, disulfide compounds, thioketone compounds, thiazole compounds, thiophene compounds and the like.

Examples of sulfide salts include potassium sulfide, sodium sulfide, sodium polysulfide and potassium polysulfide, thiocyanic acid salts include sodium thiocyanate, potassium thiocyanate and dipotassium thiocyanate, and thiourea compounds include thiourea, methylthiourea and dimethylthiourea.

Mercaptane compounds include 1,1-dimethylethanethiol, 1-methyl-octanethiol, dodecanethiol, 1,2-ethanedithiol, thiophenol, o-thiocresol, p-thiocresol, o-dimercaptobenzene, m-dimercaptobenzene, p-dimercaptobenzene, thioglycol, thiodiglycol, thioglycolic acid, dithioglycolic acid, thiomalic acid, mercaptopropionic acid, 2-mercaptobenzimidazole, 2-mercapto-1-methylimidazole and 2-mercapto-5-methylbenzimidazole.

Sulfide compounds include diethyl sulfide, diisopropyl sulfide, ethylisopropyl sulfide, diphenyl sulfide, methylphenyl sulfide, rhodanine, thiodiglycolic acid and thiodipropionic acid, and disulfide compounds include dimethyl disulfide, diethyl disulfide and dipropyl disulfide.

Thiosemicarbazide is an example of a thioketone compound, while examples of thiazole compounds include thiazole, benzothiazole, 2-mercaptobenzothiazole, 6-ethoxy-2-mercaptobenzothiazole, 2-aminothiazole, 2,1,3-benzothiadiazole, 1,2,3-benzothiadiazole, (2-benzothiazolylthio)acetic acid and 3-(2-benzothiazolylthio)propionic acid, and examples of thiophene compounds include thiophene and benzothiophene.

Sulfur-based compounds may be used alone, or two or more may be used. The sulfur-based compound content is preferably 1 ppm to 500 ppm, more preferably 1 to 30 ppm and most preferably 1 to 10 ppm. If the sulfur-based compound content is less than 1 ppm, the deposition rate will be reduced, the sections around the plating will show defects, and the film appearance will be impaired. If it exceeds 500 ppm, management of the concentration will be difficult and the plating solution will become unstable.

The electroless gold plating solution preferably contains, in addition to the aforementioned gold salt, reducing agent, heavy metal salt and sulfur-based compound, also at least one selected from among chelating agents, pH buffering agents and metal ion masking agents, and more preferably it contains all of these.

The electroless gold plating solution of the invention preferably contains a chelating agent. Specifically, there may be mentioned non-cyanogen-based chelating agents such as sulfurous acid salts, thiosulfuric acid salts and thiomalic acid salts. The chelating agent content is preferably 1 to 200 g/L based on the total volume of the plating solution. If the chelating agent content is less than 1 g/L, the chelating power will be reduced and the stability will be reduced. If it exceeds 200 g/L, the plating stability will be increased but recrystallization will occur in the solution, which is not economical. The chelating agent content is more preferably 20 to 50 g/L.

The electroless gold plating solution preferably contains a pH buffering agent. A pH buffering agent has the effect of maintaining a fixed value for the deposition rate and stabilizing the plating solution. Several buffering agents may also be used in admixture. Common pH buffering agents include phosphoric acid salts, acetic acid salts, carbonates, boric acid salts, citric acid salts and sulfuric acid salts, with boric acid salts and sulfuric acid salts being most preferred.

The pH buffering agent content is preferably 1 to 100 g/L based on the total volume of the plating solution. If the pH buffering agent content is less than 1 g/L the pH buffer effect will be lost, and if it is greater than 100 g/L the potential for recrystallization will arise. The content is more preferably 20 to 50 g/L.

The electroless gold plating solution preferably contains a masking agent. Benzotriazole-based compounds may be used as masking agents, examples of benzotriazole-based compounds including benzotriazole sodium, benzotriazole potassium, tetrahydrobenzotriazole, methylbenzotriazole and nitrobenzotriazole.

The content of the metal ion masking agent is preferably 0.5 to 100 g/L based on the total volume of the plating solution. If the content of the metal ion masking agent is less than 0.5 g/L, the masking effect of impurities will be reduced and it may not be possible to adequately ensure liquid stability. If it is greater than 100 g/L, on the other hand, recrystallization may take place in the plating solution. In consideration of cost and effect, the range of 2 to 10 g/L is most preferred.

The pH of the gold plating solution is preferably in the range of 5 to 10. If the pH of the plating solution is lower than 5, the sulfurous acid salt or thiosulfuric acid salt as the chelating agent of the plating solution will dissolve, potentially generating toxic sulfurous acid gas. If the pH is higher than 10, the stability of the plating solution will tend to be reduced. In order to increase the reducing agent deposition efficiency and obtain a rapid deposition rate, the pH of the electroless gold plating solution is preferably in the range of 8 to 10.

The method of electroless plating may be gold plating by immersion of a filter that has completed displacement gold plating.

The plating liquid temperature may be 50°C to 95°C. The deposition efficiency is poor at below 50°C, and the solution will tend to be unstable at 95°C and higher.

The gold layer formed in this manner preferably comprises gold with a purity of 99 mass% or greater. If the gold purity of the gold layer is less than 99 mass%, cytotoxicity of the contacted sections will increase. From the viewpoint of increasing the reliability, the purity of the gold layer is more preferably 99.5 mass% or greater.

The thickness of the gold layer 8 is 0.1 to 3 $\mu$m, more preferably 0.1 to 1 $\mu$m and even more preferably 0.1 $\mu$m to 0.5 $\mu$m. If the thickness of the gold layer is at least 0.005 $\mu$m it will be possible to prevent elution of the metal to some extent. However, this effect is not further increased with a thickness exceeding 3 $\mu$m, and therefore the thickness is preferably no greater than 3 $\mu$m from an economical viewpoint.

The gold surface formed in this manner has no cytotoxicity, and is stable in air and in most aqueous solutions including blood. However, gold surfaces are relatively hydrophobic and have low biocompatibility, and therefore surface treatment with an organic material may be performed to improve biocompatibility. The following is an example of surface treatment.

The gold surface may be modified with a compound having a mercapto group, a sulfide group or a disulfide group that forms a coordination bond with gold. The coordinate bond of the organic material with gold can form a chemically strong bond between gold and the organic material.

Examples of the compound include mercaptoacetic acid, 2-aminoethanethiol, and o-fluorobenzenethiol, m-hydroxybenzenethiol, 2-methoxybenzenethiol, 4-aminobenzenethiol, cysteamine, cysteine, dimethoxythiophenol, furfurylmercaptane, thioacetic acid, thiobenzoic acid, thiosalicylic acid and dithiodipropionic acid.

There are no particular restrictions on the method of the surface treatment with the compound on the gold surface, and a compound such as mercaptoacetic acid may be dispersed in an organic solvent such as methanol or ethanol to about 10 to 100 mmol/L, and conductive particles with gold surfaces dispersed therein.

The organic material on the gold surface is then preferably covered with a biocompatible polymer or the like. Most biocompatible polymers have a minus charge. It is therefore preferred to introduce amino groups into the organic material on the gold surfaces and react them with a biocompatible polymer or the like having a minus charge.

Such a method is known as layer-by-layer assembly. Layer-by-layer assembly is an organic thin-film forming method published in 1992 by G. Decher et al. (Thin Solid Films, 210/211, p831(1992)). In this method, a base material is alternately dipped in an aqueous solution comprising a polymer electrolyte with a positive charge (polycation) and a polymer electrolyte with a negative charge (polyanion) to layer polycation and polyanion pairs that have been adsorbed by electrostatic attraction onto the substrate, in order to obtain a composite film (alternately layered film).

In layer-by-layer assembly, electrostatic attraction promotes film growth since the charge of the material formed on the base material and the material having the opposite charge in the solution attract each other, and therefore as adsorption proceeds and the electrical charges are neutralized, no further adsorption takes place. Consequently, the film thickness does not increase further after a certain saturation point is reached. Lvov et al. have reported on a method in which layer-by-layer assembly is applied to fine particles, using fine particle dispersions of silica, titania or ceria, and forming layers of a polymer electrolyte having the opposite charge to the surface charge of the fine particles, by layer-by-layer assembly (Langmuir, Vol.13, (1997), p6195-6203).

First, a thiol-based compound with an amino group (a compound having a mercapto group, a sulfide group or a disulfide group) is used for treatment on the gold surface. Specifically, this may be 2-aminoethanethiol or cysteine and 4-aminobenzenethiol, with 2-aminoethanethiol being preferred.

Biocompatible polymers include polyethylene glycol and the like, and 2-hydroxylethyl polymethacrylate, with no particular restrictions. Acrylic acid or methacrylic acid may also be copolymerized with the polymer in order to impart chemical bondability with the amino groups.

Generally, such polymers may be in the range of preferably about 500 to 1,000,000 and more preferably 5,000 to 200,000, although this will depend on the type of polymer and cannot be specified for all cases. The concentration of the polymer electrolyte in the solution is usually preferred to be about 0.01 to 10% (by weight). The pH of the polymer electrolyte solution is not particularly restricted.

Also, adjusting the type, molecular weight and concentration of the polymer electrolyte thin-film allows the coverage factor to be controlled.

Examples

(Example 1)

A photosensitive resin composition (PHOTEC RD-1225: 25 $\mu$m thickness, product of Hitachi Chemical Co., Ltd.) was laminated onto one side of a 250 mm-square substrate (MCL-E679F: substrate having peelable copper foil attached onto an MCL surface, product of Hitachi Chemical Co., Ltd.). The laminating conditions were a roll temperature of 90°C, a pressure of 0.3 MPa and a conveyor speed of 2.0 m/min.

Next, a glass mask having rounded rectangular shapes as the light transmitting sections, a size of 7.8 x 30 $\mu$m and a pitch of 60 $\mu$m in both the short axis and long axis directions, was placed on the photoresist laminate side of the substrate. For this example there was used a glass mask with rounded rectangular shapes oriented in the same direction and a fixed pitch in the long axis and short axis directions.

Next, ultraviolet rays with an exposure dose of 30 mJ/cm$^2$ were irradiated with an ultraviolet irradiation device from above the substrate on which the glass mask had been set, under a vacuum of no greater than 600 mmHg.

Development was then performed with 1.0% aqueous sodium carbonate to form a resist layer wherein the rectangular photoresist stood perpendicular to the substrate. Plating was carried out to about 20 $\mu$m on the copper exposed sections of the resist-attached substrate, with a nickel plating solution adjusted for a pH of 4.5, at a temperature of 55°C for approximately 20 minutes. The composition of the nickel plating solution is shown in Table 1.

[Table 1]

| Plating solution composition | Concentration (g/L) |
| --- | --- |
| Nickel sulfaminate | 450 |
| Nickel chloride | 5 |
| Boric acid | 30 |

Next, the obtained nickel plating layer was released together with the peelable copper foil of the substrate, and the peelable copper foil was chemically dissolved with a chemical solution (MECBRITE SF-5420B, Mec Co., Ltd.) by stirring treatment for approximately 120 minutes at a temperature of 40°C for removal, and the self-supporting film (20 mm x 20 mm) serving as the metal filter was removed out.

Finally, the photoresist remaining inside the self-supporting film was removed by release of the photoresist (P3 Poleve, Henkel) by ultrasonic treatment for approximately 40 minutes at a temperature of 60°C, to fabricate a metal filter having fine through-holes.

This produced a metal filter with adequately precise through-holes, without damage such as wrinkles, folds, nicks or curls.

Next, the metal filter was dipped in an acidic degreasing solution Z-200 (trade name of World Metal Co., Ltd.) for removal of the organic material on the metal filter (40°C, 3 min).

After rinsing, displacement gold plating pretreatment was carried out under conditions of 80°C, 10 minutes using a solution prepared by removing the gold sulfite, as a gold source, from the non-cyanogen-based electroless Au plating HGS-100 (trade name of Hitachi Chemical Co., Ltd.).

Next, it was dipped in the non-cyanogen-based displacement electroless Au plating HGS-100 (trade name of Hitachi Chemical Co., Ltd.) at 80°C for 20 minutes for displacement gold plating. The thickness of the displacement gold plating was 0.05 $\mu$m.

After rinsing, it was dipped in the non-cyanogen-based reductive electroless Au plating HGS-5400 (trade name of Hitachi Chemical Co., Ltd.) at 65°C for 10 minutes for gold plating, and then rinsed and dried. The total thickness of the gold plating was 0.2 μm.

Next, 8 mmol of 2-aminoethanethiol was dissolved in 200 ml of methanol to prepare a reaction mixture. The gold plated metal filter was added to the reaction mixture and reaction was conducted at room temperature for 2 hours.

The metal filter with amino groups was dipped in a 0.3 wt% aqueous solution of polyethylene glycol with a molecular weight of 100,000, to produce a gold plating filter having a biocompatible polymer on the surface.

(Example 2)

A gold plating filter having a biocompatible polymer on the surface was fabricated in the same manner as Example 1, except that electrolytic silver plating was used instead of electrolytic Ni plating. The silver plating solution used was SILVREX 400 (trade name of Electroplating Engineers of Japan, Ltd.). Plating was carried out under the same conditions as Example 1, except that the plating was with a plating temperature of 25°C and a current density of 1.5 A/dm$^2$, and electroplating was to approximately 20 μm at about 1 μm/min.

(Example 3)

A gold plating filter having a biocompatible polymer on the surface was fabricated in the same manner as Example 1, except that electrolytic palladium plating was used instead of electrolytic Ni plating. The electrolytic palladium plating solution used was PALLADIX LF-5 (trade name of Electroplating Engineers of Japan, Ltd.). Plating was carried out under the same conditions as Example 1, except that plating was with a plating temperature of 50°C and a current density of 1 A/dm$^2$, and electroplating was to approximately 20 μm at about 4.2 μm/min.

(Example 4)

A peelable nickel foil was used instead of the MCL peelable copper foil (the nickel foil being removed after electroplating). A gold plating filter having a biocompatible polymer on the surface was also fabricated in the same manner as Example 1, except that electrolytic copper plating was used instead of electrolytic Ni plating. The electrolytic copper plating solution used was MICROFAB Cu200 (trade name of Electroplating Engineers of Japan, Ltd.). Plating was carried out under

the same conditions as Example 1, except that plating was with a plating temperature of 25°C and a current density of 3 A/dm$^2$, and electroplating was to approximately 20 μm at about 1.5 μm/min.

(Example 5 - reference example, not according to the invention)

A gold plating filter having a biocompatible polymer on the surface was fabricated in the same manner as Example 1, except that reductive gold plating was not carried out after displacement gold plating. The gold plating thickness was 0.05 μm.

(Example 6)

A gold plating filter was fabricated in the same manner as Example 1, except that displacement gold plating was followed by reductive gold plating but not surface treatment.

(Example 7)

A gold plating filter having a biocompatible polymer on the surface was fabricated in the same manner as Example 1, except for the following displacement gold step.

Displacement gold step: The metal filter was dipped in an acidic degreasing solution Z-200 (trade name of World Metal Co., Ltd.) for removal of the organic material on the metal filter (40°C, 3 min). After rinsing, displacement gold plating pretreatment was carried out under conditions of 80°C, 10 minutes using a solution prepared by removing the gold sulfite, as a gold source, from the cyanogen-based electroless Au plating HGS-500 (trade name of Hitachi Chemical Co., Ltd.). Next, it was dipped in the cyanogen-based displacement electroless Au plating HGS-500 (trade name of Hitachi Chemical Co., Ltd.) at 80°C for 20 minutes for displacement gold plating. The thickness of the displacement gold plating was 0.05 μm.

(Comparative Example 1)

A filter having a biocompatible polymer on the surface was fabricated in the same manner as Example 1, except that gold plating was not carried out.

(Experiment)

(Preparation of small cell carcinoma cell line)

The small cell carcinoma cell line NCI-H358 was grown by stationary culture in RPMI-1640 medium containing 10% fetal bovine serum (FBS) under conditions of 37°C, 5% $CO_2$. The cells were released from the culture dish by trypsin treatment and recovered, and then rinsed using phosphate buffer (Phosphate buffered saline, PBS) and stationed in 10 μM CellTracker Red CMTPX (Life Technologies Corp.) at 37°C for 30 minutes to stain the NCI-H358 cells. They were then rinsed with PBS and stationed for 3 minutes at 37°C with trypsin treatment, to dissociate the cell mass. Next, the trypsin treatment was interrupted using medium, and the cells were rinsed with PBS and suspended in PBS containing 2 mM EDTA and 0.5% bovine serum albumin (BSA) (hereunder referred to as 2 mM EDTA-0.5% BSA-PBS). The PBS used was phosphate-buffered saline, product code 166-23555 by Wako Pure Chemical Industries, Ltd. The EDTA used was 2Na (disodium ethylenediamine-N,N,N,N-tetraacetate dihydrate) (product code 345-01865 by Wako Pure Chemical Industries, Ltd.).

(Concentration of CTCs in blood sample)

An experiment was conducted using a CTC recovering apparatus (CTC SEPARATOR, provisional trade name of Hitachi Chemical Co., Ltd.) having a filter of the example or comparative example set therein. The CTC recovering apparatus had channels for introducing blood sample or reagent, the channel entrances being connected to a reservoir created by syringe modification. The blood sample and reagent were introduced sequentially into the reservoir to facilitate continuous execution of the procedures for entrapment, staining and rinsing of the CTCs.

The blood sample was introduced into the CTC recovering apparatus for concentration of the cancer cells. The blood sample used was a sample containing 1000 cancer cells per 1 mL of blood, the blood being sampled from a healthy person in an EDTA-containing vacuum blood sampling tube. The cancer cells used were of the aforementioned human small-cell lung cancer cell line NCI-H358.

First, 1 ml of 2 mM EDTA-0.5% BPS-PBS was introduced into the reservoir and allow to fill the space over the filter. Next, a peristaltic pump was used to initiate liquid conveyance at a flow rate of 200 μL/min. After approximately 5 minutes, 2 mL of 2 mM EDTA-0.5% BSA-PBS was introduced into the reservoir for rinsing of the cells.

After another 10 minutes, the pump flow rate was changed to 20 μL/min, 600 μL of cell staining solution (Hoechst 33342 0.5 μg/mL) was introduced into the reservoir, and the cancer cells or leukocytes on the filter were fluorescent-stained. After staining the trapped cells on the filter for 30 minutes, 1 mL of 2 mM EDTA-0.5% BSA-PBS was introduced into the reservoir for rinsing of the cells.

Next, a fluorescent microscope (BX61, by Olympus Corp.) equipped with a computer-controlled electronic stage and cooled digital camera (DP70, by Olympus Corp.) was used to observe the filter, and the numbers of cancer cells and leukocytes on the filter were counted. In order to observe the fluorescence from the Hoechst 33342 and CellTracker Red CMTPX, images were obtained using a WU and WIG filter (Olympus Corp.), respectively. Lumina Vision (Mitani Corp.) was used as the imaging and analysis software. The results are shown in Table 2. Cell recovery rate (%) = Number of cancer cells recovered on filter/number of cancer cells mixed with blood sample x 100%. The air bubbles adhering to the filter were also observed.

(Metal ion elution test)

As mentioned above, many metal ions are cytotoxic and therefore constitute obstacles when analyzing recovered cancer cells. The metal ions were therefore measured under the following conditions.

The mass of a filter (20 mm x 20 mm) was measured and it was immersed in 20 ml of an aqueous solution (2 mM EDTA-0.5% PBS). Immersion was continued for 2 hours at 25°C for extraction of the metal ions.

The extract was filtered with a 0.2 μm mesh, and aqua regalis was added to 50% dilution.

The ions in the aqua regalis-diluted solution were measured by atomic absorption. The total elution ion quantity was estimated from the measured concentration and the elution ratio was calculated by the following formula.

$$\text{Elution ratio (ppm)} = \text{total eluted ions/filter mass}$$

(Water contact angle)

A DropMaster 500 (trade name of Kyowa Interface Science Co., Ltd.) was used to measure the contact angle at the non-opening sections of the filter.

(Results)

The results are shown in Table 2. As demonstrated in Example 1, it is possible to minimize elution of metal ions by conducting polymer treatment in addition to non-cyanogen-based displacement plating and reduction plating. Hydrophilic polymer treatment lowers the contact angle, increases wettability and minimizes generation of air bubbles around the through-holes. As a result, the CTC recovery rate and leukocyte survival rate are satisfactory. Example 4 used Cu instead of Ni, thereby allowing metal elution to be reduced. Examples 2 and 3 used precious metals instead of Ni, and therefore the metal ions did not elute. Example 5 was less discolored and eluted less Ni ion compared to Comparative Example 1 which was not treated with electroless gold plating. Example 5 omitted reductive gold plating, and therefore the gold plating thickness was small at 0.05 $\mu$m. The filter was therefore slightly discolored and Ni ion elution increased compared to Example 1. Example 6 omitted biocompatible polymer treatment, and therefore the filter surface was water-repellent and air bubbles tended to be generated. Elution of Ni ions also tended to increase. Example 7 used cyanogen-based displacement gold. Example 7 eluted less Ni ion compared to Comparative Example 1. Cyanogen has a high Ni metal dissolving effect, and the gold plating coverage factor tends to be poor. Because Ni elution therefore increased, this example was inferior to Example 1 which employed a non-cyanogen. In this point, non-cyanogen gold was superior to cyanogen gold. Comparative Example 1 omitted gold plating. The Ni elution was high and the outer appearance was significantly impaired. The CTC concentration rate and recovery rate were also reduced. Furthermore, because of the large Ni oxide film thickness, surface treatment was more difficult compared to Au. A high value for the contact angle was therefore exhibited.

[Table 2]

| | | Ex. 1 | Ex. 2 | Ex. 3 | Ex. 4 | Ex. 5 | Ex. 6 | Ex. 7 | Comp Ex. 1 |
|---|---|---|---|---|---|---|---|---|---|
| Mesh conditions | Base metal | Ni | Ag | Pd | Cu | Ni | Ni | Ni | Ni |
| | Displacement metal | Non-cyanogen | Non-cyanogen | Non-cyanogen | Non-cyanogen | Non-cyanogen | Non-cyanogen | Cyanogen | None |
| | Reducing metal | Non-cyanogen | Non-cyanogen | Non-cyanogen | Non-cyanogen | None | Non-cyanogen | Non-cyanogen | None |
| | Polymer treatment | Yes | Yes | Yes | Yes | Yes | No | Yes | Yes |
| CTC concentration | Cancer cell recovery rate (%) | 84 | 83 | 82 | 83 | 81 | 73 | 81 | 75 |
| | Residual leukocyce count | 768 | 789 | 726 | 776 | 798 | 1370 | 821 | 1150 |
| | Air bubbles | No | No | No | No | No | Yes | No | Yes |
| Atomic absorption | Ni ion | 20 ppm | 0 ppm | 0 ppm | 0 ppm | 100 ppm | 70 ppm | 150 ppm | 1400 ppm |
| | Ag ion | 0 ppm | 0 ppm | 0 ppm | 0 ppm | 0 ppm | 0 ppm | 0 ppm | 0 pom |
| | Pd ion | 0 ppm | 0 ppm | 0 ppm | 0 ppm | 0 ppm | 0 ppm | 0 ppm | 0 ppm |
| | Cu ion | 0 ppm | 0 ppm | 0 ppm | 10 ppm | 0 ppm | 0 ppm | 0 ppm | 0 ppm |
| | Au ion | 0 ppm | 0 ppm | 0 ppm | 0 ppm | 0 ppm | 0 ppm | 0 ppm | 0 ppm |
| | Appearance[+] | G | G | G | G | (discoloration) | G | F (discoloration) | P (blackening) |
| Contact angle | | 35° | 37° | 33° | 35° | 35° | 82° | 37° | 72° |
| Overall evaluation [++] | | G | VG | VG | G | F | F | F | P |

[+]G: No change in outer appearance, F: Partial discoloration, P: Overall black rusting

[++]VG: Very satisfactory, G: Satisfactory, F. Usable, P: Unusable Ex. 5: Reference example, not according to invention

EP 2 982 743 B1

13

As explained above using a gold plating filter according to the present invention improves the properties over conventional metal filters.

### Reference Signs List

1: MCL, 2: peelable copper foil, 2': copper sheet, 3: photoresist, 3a: photoresist exposed section, 3b: photoresist developing section, 4: photomask, 5: electroforming plating layer, 6: through-hole, 7: gold plating.

### Claims

1. A biomolecule capturing filter, comprising a gold plating on the surface of a biomolecule capturing filter made of a metal other than gold, the gold plating being electroless gold plating, wherein the thickness of the gold plating is from 0.1 $\mu$m to 3 $\mu$m.

2. A biomolecule capturing filter according to claim 1, wherein the electroless gold plating contains no cyanogen.

3. A biomolecule capturing filter according to claim 1 or 2, wherein the biomolecule capturing filter is composed mainly of nickel, silver, palladium, copper, or an alloy containing nickel, silver, palladium or copper.

4. A biomolecule capturing filter according to any one of claims 1 to 3, wherein the electroless gold plating is a combination of displacement gold plating, and reductive gold plating on the displacement gold plating.

5. A biomolecule capturing filter according to claim 4, wherein the displacement gold plating is non-cyanogen-based plating containing gold sulfite.

6. A biomolecule capturing filter according to any one of claims 1 to 5, wherein the gold plating thickness is between 0.1 $\mu$m and 1 $\mu$m, inclusive.

7. A biomolecule capturing filter according to any one of claims 1 to 6, wherein opening shapes of through-holes of the biomolecule capturing filter include at least one shape selected from the group consisting of circular, elliptical, rounded rectangular, rectangular and square.

8. A biomolecule capturing filter according to any one of claims 1 to 7, wherein opening shapes of through-holes of the biomolecule capturing filter include at least one shape selected from the group consisting of rectangular and rounded rectangular, and short side lengths are between 5 $\mu$m and 15 $\mu$m, inclusive.

9. A biomolecule capturing filter according to any one of claims 1 to 8, wherein the metal filter before the electroless gold plating has a thickness of 3 - 50 $\mu$m.

### Patentansprüche

1. Filter zum Einfangen eines Biomoleküls, umfassend eine Goldplattierung auf der Oberfläche eines Filters zum Einfangen eines Biomoleküls, der einem anderen Metall als Gold hergestellt ist, wobei die Goldplattierung eine stromlose Goldplattierung ist und worin die Dicke der Goldplattierung von 0,1 $\mu$m bis 3 $\mu$m beträgt.

2. Filter zum Einfangen eines Biomoleküls gemäß Anspruch 1, worin die stromlose Goldplattierung kein Cyan umfasst.

3. Filter zum Einfangen eines Biomoleküls gemäß Anspruch 1 oder 2, worin der Filter zum Einfangen eines Biomoleküls im Wesentlichen aus Nickel, Silber, Palladium, Kupfer oder einer Legierung, die Nickel, Silber, Palladium oder Kupfer enthält, aufgebaut ist.

4. Filter zum Einfangen eines Biomoleküls gemäß irgendeinem der Ansprüche 1 bis 3, worin die stromlose Goldplattierung eine Kombination einer Goldersatzplattierung und einer reduktiven Goldplattierung auf der Goldersatzplattierung ist.

5. Filter zum Einfangen eines Biomoleküls gemäß Anspruch 4, worin die Goldersatzplattierung eine Nicht-Cyan-basierte Plattierung ist, die Goldsulfit enthält.

6. Filter zum Einfangen eines Biomoleküls gemäß irgendeinem der Ansprüche 1 bis 5, worin die Goldplattierungsdicke zwischen 0,1 $\mu$m und 1 $\mu$m, einschließlich, liegt.

7. Filter zum Einfangen eines Biomoleküls gemäß irgendeinem der Ansprüche 1 bis 6, worin die Öffnungsformen von durchstoßenden Löchern des Filters zum Einfangen eines Biomoleküls zumindest eine Form umfassen, ausgewählt aus der Gruppe, bestehend aus kreisförmig, elliptisch, abgerundet rechtwinklig, rechtwinklig und quadratisch.

8. Filter zum Einfangen eines Biomoleküls gemäß irgendeinem der Ansprüche 1 bis 7, worin die Öffnungsformen von durchstoßenden Löchern des Filters zum Einfangen eines Biomoleküls zumindest eine Form umfassen, ausgewählt aus der Gruppe, bestehend aus rechteckig und abgerundet rechteckig, und worin die kurzen Seitenlängen zwischen 5 $\mu$m und 15 $\mu$m, einschließlich, liegen.

9. Filter zum Einfangen eines Biomoleküls gemäß irgendeinem der Ansprüche 1 bis 8, worin der Metallfilter vor dem stromlosen Goldplattieren eine Dicke von 3 bis 50 $\mu$m aufweist.

**Revendications**

1. Filtre de capture de biomolécule, comprenant un placage d'or sur la surface d'un filtre de capture de biomolécule fait d'un métal autre que l'or, le placage d'or étant un placage d'or sans électrolyse, dans lequel l'épaisseur du placage d'or est de 0,1 $\mu$m à 3 $\mu$m.

2. Filtre de capture de biomolécule selon la revendication 1, dans lequel le placage d'or ne contient pas de cyanogène.

3. Filtre de capture de biomolécule selon la revendication 1 ou 2, dans lequel le filtre de capture de biomolécule est composé principalement de nickel, d'argent, de palladium, de cuivre, ou d'un alliage contenant du nickel, de l'argent, du palladium ou du cuivre.

4. Filtre de capture de biomolécule selon l'une quelconque des revendications 1 à 3, dans lequel le placage d'or sans électrolyse est une combinaison de placage d'or de déplacement, et de placage d'or de réduction sur le placage d'or de déplacement.

5. Filtre de capture de biomolécule selon la revendication 4, dans lequel le placage d'or de déplacement est un placage à base de non-cyanogène contenant du sulfite d'or.

6. Filtre de capture de biomolécule selon l'une quelconque des revendications 1 à 5, dans lequel l'épaisseur du placage d'or est entre 0,1 $\mu$m et 1 $\mu$m, inclus.

7. Filtre de capture de biomolécule selon l'une quelconque des revendications 1 à 6, dans lequel des formes d'ouverture de trous traversant du filtre de capture de biomolécule comporte au moins une forme choisie parmi le groupe constitué de circulaire, elliptique, rectangulaire arrondie, rectangulaire et carrée.

8. Filtre de capture de biomolécule selon l'une quelconque des revendications 1 à 7, dans lequel des formes d'ouverture de trous traversant du filtre de capture de biomolécule comporte au moins une forme choisie parmi le groupe constitué de rectangulaire et rectangulaire arrondie, et des longueurs de côtés courts sont entre 5 $\mu$m et 15 $\mu$m, inclus.

9. Filtre de capture de biomolécule selon l'une quelconque des revendications 1 à 8, dans lequel le filtre métallique avant le placage d'or sans électrolyse a une épaisseur de 3-50 $\mu$m.

*Fig.1*

# Fig.2

(A) ⟍ 2'

(B) ⟍ 3
⟍ 2'

[ UV LIGHT ]

(C) ⟍ 4
⟍ 3
⟍ 2'

3a    3a    3a    3a

3a  3b  3a  3b  3a  3b  3a  3b

(D) ⟍ 2'

3a    3a    3a    3a

(E) ⟍ 5
⟍ 2'

(F) ⟍ 5

3a    3a    3a    3a

(G) ⟍ 5

6    6    6    6

(H)

7    7    7    7    7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010135603 A
- JP 2013042689 A
- WO 2013172265 A1
- EP 2851418 A1
- WO 2012173097 A1

**Non-patent literature cited in the description**

- **KAGAKU BINRAN.** The Chemical Society of Japan. Maruzen, 1993
- **A. YAMAMOTO et al.** *J. Biomed. Mater. Res.,* 1998, vol. 39, 331
- **G. DECHER et al.** *Thin Solid Films,* 1992, vol. 210/211, 831
- *Langmuir,* 1997, vol. 13, 6195-6203